## Europäisches Patentamt
## European Patent Office
## Office européen des brevets

(19)

(11) Veröffentlichungsnummer: **0 372 207 B1**

# EUROPÄISCHE PATENTSCHRIFT

(12)

(45) Veröffentlichungstag der Patentschrift: **15.02.95**

(21) Anmeldenummer: **89119674.3**

(22) Anmeldetag: **24.10.89**

Die Akte enthält technische Angaben, die nach dem Eingang der Anmeldung eingereicht wurden und die nicht in dieser Patentschrift enthalten sind.

(51) Int. Cl.⁶: **C08J 7/12**, //C08L23:02, C08L9:00,C08L25:06

(54) **Verfahren zur Erzeugung glatter Oberflächen auf Gegenständen aus Polymeren von Ethylen, Propylen, Butadien und Polystyrol.**

(30) Priorität: **30.11.88 DE 3840269**

(43) Veröffentlichungstag der Anmeldung: **13.06.90 Patentblatt 90/24**

(45) Bekanntmachung des Hinweises auf die Patenterteilung: **15.02.95 Patentblatt 95/07**

(84) Benannte Vertragsstaaten: **DE ES FR GB IT SE**

(56) Entgegenhaltungen: **DE-A- 2 412 025 US-A- 4 764 405**

(73) Patentinhaber: **MESSER GRIESHEIM GMBH Hanauer Landstrasse 330 D-60314 Frankfurt (DE)**

(72) Erfinder: **Eschwey, Manfred, Dr. Kreuzbergstrasse 7H D-4000 Düsseldorf 31 (DE)** Erfinder: **van Bonn, Rolf Salzachstrasse 5 D-4100 Duisburg 29 (DE)** Erfinder: **Neumann, Horst Andreas-Faust-Strasse 11 D-6233 Kelkheim (DE)**

EP 0 372 207 B1

## Beschreibung

Die Erfindung betrifft ein Verfahren zur Erzeugung glatter Oberflächen auf Gegenständen aus Polymeren von Ethylen, Propylen, Butadien und Polystyrol nach dem Oberbegriff des Anspruches 1.

In fast allen Bereichen der Kunststoffverarbeitung spielt die sich nach einem Verarbeitungsschritt einstellende Oberfläche eine wichtige Rolle. Gleit- und Reibungswiderstand, Permeationsverhalten, Benetzbarkeit und Glanz, um nur einige Eigenschaften von Polymeroberflächen zu nennen, werden in entscheidender Weise durch die Morphologie der Oberfläche geprägt. Eine möglichst auch im mikroskopischen Bereich glatte Oberfläche minimiert sämtliche Wechselwirkungen der Oberfläche mit den mit ihr in Kontakt stehenden Medien. So wird die Geschwindigkeit von Permeations- und Quellvorgängen wesentlich durch die verfügbare aktive Oberfläche des Polymers beeinflußt, vgl. "Sperrschichtbildung bei Kunststoffhohlkörpern", Herausgeber Verein Dt.Ingenieure, VDI Verlag, ISBN 3-18-234121-9, S.20/21. Neben diesen vorteilhaften Eigenschaften einer glatten Oberfläche gegenüber den matten Oberflächen, wie sie derzeit Gegenstände beispielsweise aus HDPE aufweisen, hat eine glatte, glänzende Oberfläche auf vielen Gebieten auch eine dekorative Wirkung. Hochglänzende Oberflächen sind meist die Voraussetzung für die gute Absetzbarkeit von Halbzeug, z.B. Folien und Fertigteilen, z.B. Haushaltsartikeln.

Der Erfindung liegt die Aufgabe zugrunde, ein Verfahren zur Erzeugung glatter Oberflächen auf Gegenständen aus Polymeren von Ethylen, Propylen, Butadien und Polystyrol zu schaffen, welche durch die hierdurch erreichte Minimierung der aktiven Oberfläche äußerst geringe Wechselwirkungen mit Medien aufweisen, die mit ihr in Kontakt stehen.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Wesentlich für das erfindungsgemäße Verfahren ist demnach die gleichzeitige Einwirkung von gasförmigem Fluor und gasförmigem Sauerstoff auf die Polymeroberfläche. Die auf diese Weise erzeugten fluorierten Grenzschichten zeichnen sich gegenüber sauerstofffreierzeugten Schichten durch folgende Eigenschaften aus:

Rasterelektronenmikroskopische Aufnahmen der Oberfläche ergeben selbst bei einer 10000fachen Vergrößerung eine einheitliche glatte Struktur.

Die erfindungsgemäß erzeugten Oberflächen sind hochglänzend gegenüber unbehandelten Oberflächen oder sauerstofffrei fluorierten Oberflächen.

Die gemäß der Erfindung hergestellten Oberflächen besitzen eine gute Sperrwirkung gegenüber unpolaren Lösungsmitteln. Wegen der günstigen Oberflächenstruktur genügen zum Erreichen dieser Sperrwirkung sehr geringe Fluorbelegungsdichten von maximal etwa 6 $\mu$g/cm$^2$. Ausschließlich mit Fluor behandelte Oberflächen erfordern ein vielfaches dieser Belegungsdichte.

Die Erfinder führen diese überraschenden Ergebnisse auf einen gleichzeitig neben der Fluorierung ablaufenden Ätzabtrag durch Sauerstoff zurück. Bei der stark exothermen Reaktion des Fluors mit den Kohlenwasserstoff-Bindungen des Polymers werden große Wärmemengen freigesetzt, die in den oberflächennahen Bereichen zum Aufschmelzen führen. Beim Wiedererstarren durch Abkühlung kommt es aufgrund der unterschiedlichen Ausdehnungskoeffizienten von fluorierter Grenzschicht und Basispolymer zu Auffaltungen und Verwerfungen. Die Anwesenheit von Sauerstoff verhindert dies jedoch. Die Oberflächenanteile mit hoher Energie, also Spitzen und Kämme, werden bevorzugt durch den oxidativen Ätzangriff des Sauerstoffs abgetragen. Dies konnte durch IR-spektroskopische Quantifizierung der sich bei dieser Reaktion bildenden flüchtigen Reaktionsprodukte $CO_2$ und HF bestätigt werden. Der für das erfindungsgemäße Verfahren erforderliche Gehalt an Fluor von 0,01 bis 0,5 Vol.% im Gasgemisch ist sehr gering gegenüber dem Fluoreinsatz bei reinen Fluorierungsverfahren. Der für das erfindungsgemäße Verfahren bevorzugte Temperaturbereich liegt für HDPE zwischen 130 und 160°C und ermöglicht ein besonders leichtes Aufschmelzen der Polymeroberfläche. Er liegt in jedem Falle oberhalb des Kristallitschmelzpunktes des jeweiligen Polymers. Der Kristallitschmelzpunkt ist der Schemlzpunkt der aus den langen Molekülketten des Polymers beim Abkühlen gebildeten Kristallite. Bei HDPE liegt der Anteil der Kristallite je nach Polymerisationsverfahren zwischen 40% und 80%, der Rest besteht aus amorphen Anteilen. Die erforderlichen Kontaktzeiten sind kurz und liegen in der Regel zwischen 10 und 30 Sekunden. Bevorzugt Behandlungsdrücke sind 0,1 bis 11 bar. Es können aber auch erheblich höhere Drücke, beispielsweise 20 bar, angewendet werden. Die mit dem erfindungsgemäßen Verfahren erreichbaren Rauhigkeitstiefen liegen zwischen 0,4 und 0,6 $\mu$m. Demgegenüber weisen unbehandelte oder fluorierte Oberflächen Rauhigkeiten auf, die um ein Vielfaches über diesen Werten liegen.

Die Wirksamkeit des erfindungsgemäßen Verfahrens wird auf nachfolgendem Beispiel ersichtlich: Flaschen aus HDPE (Hostalen[(R)]GM 7746 schwarz der HOECHST AG mit einer Dichte von 0.944 bis $0.948g/cm^3$) mit einem Volumen von 500 ml wurden in einem Autoklaven bei 10 bar und einer einheitlichen Oberflächentemperatur des Polymers von ca. 135 °C sowohl von innen als auch von außen mit verschiedenen Gemischen aus Stickstoff, Fluor und Sauerstoff gemäß der Erfindung beaufschlagt.

Die Kontaktzeiten betrugen in allen Fällen 20 Sekunden. Es ergaben sich die in der nachstehende Tabelle zusammengestellten Versuchsergebnisse.

```
    Permeationsversuche mit 500 cm³-Flaschen aus
              HOSTALEN(R)GM 7746 schwarz
```

| Probe | $F_2$ Vol.% | $O_2$ Vol.% | Oberflächen-beschaffenheit; Rauhigkeitstiefenmessung $r_a$ | F-Belegungs-dichte $(\mu g/cm^2)$ je 2 Mess. |
|---|---|---|---|---|
| I/1 | 0,2 | 1,3 | glänzend | |
| I/2 | 0,2 | 1,3 | " 0,58 μm | 5 / 5 |
| I/3 | 0,2 | 1,3 | " | |
| I/4 | 0,2 | 1,3 | " | |
| II/1 | 0,4 | 2,6 | " | |
| II/2 | 0,4 | 2,6 | " 0,58 μm | 6 / 6 |
| II/3 | 0,4 | 2,6 | " | |
| II/4 | 0,4 | 2,6 | " | |
| III/1 | 0,4 | 0,0 | matt | |
| III/2 | 0,4 | 0,0 | " 1,25 μm | 16 / 17 |
| III/3 | 0,4 | 0,0 | " | |
| III/4 | 0,4 | 0,0 | " | |
| IV/1 | 1,27 | 0,0 | matt 1,7 μm | 35 / 38 |
| IV/2 | | | " | |

Die unbehandelte Probe hatte eine matte Oberfläche mit Rauhigkeitstiefen zwischen 1,7 und 3,5 μm.

Trotz der geringen Fluorbelegungsdichte haben die erfindungsgemäß hergestellten Oberflächen gegenüber polaren Lösungsmitteln eine Sperrwirkung, die um den Faktor 2 bis 5 besser ist als die unter anaeroben Bedingungen erzeugten fluorierten Oberflächen. Um dies nachzuweisen, wurden unter sonst gleichen Bedingungen die Flaschen lediglich auf ihrer inneren Oberfläche gemäß der Erfindung behandelt. Zum Prüfen der Permeationsverluste wurde Haltermann Testkraftstoff ERFG 30 Pb-frei, Prüftemperatur: + 40 °C, verwendet. Während die erfindungsgemäß behandelten Flaschen gemäß den Proben Nr. I und II auch nach 6 Wochen nur einen Permeationsverlust von weit unter 1 Gew.% zeigten, wiesen die konventionell behandelten Flaschen gemäß Probe III Verluste von mehreren Gew.%, teilweise über 10 Gew.% auf.

Auch die mit einem hohen Fluoreinsatz behandelten Flaschen gemäß Probe IV zeigten Permeationsverluste von nahezu 2 Gew.%.

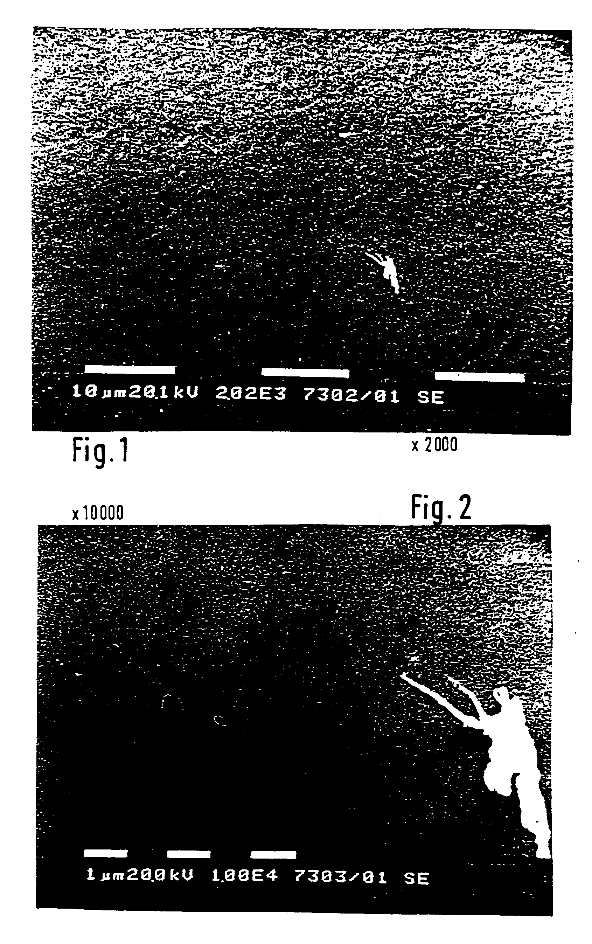

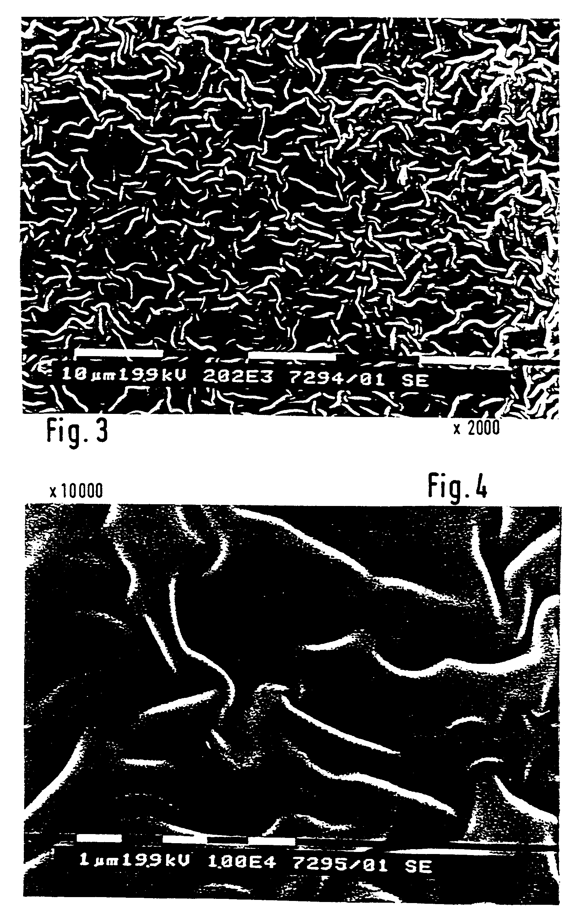

Die Fig. 1 bis 4 zeigen rasterelektronenmikroskopische Aufnahmen der Probenoberflächen. Fig.1 zeigt eine 2000fache und Fig.2 eine 10000fache Vergrößerung der Oberfläche der erfindungsgemäß behandelten Oberfläche der Probe II. Fig.3 zeigt demgegenüber eine 2000fache und Fig.4 eine 10000fache vergrößerte Oberfläche der anärob fluorierten Oberfläche der Probe III. Während die erfindungsgemäß behandelte Oberfläche eine einheitlich glatte Struktur zeigt, zeigt die konventionell behandelte Oberfläche starke Verwerfungen mit einer entsprechend vergrößerten aktiven Oberfläche des Polymers.

**Patentansprüche**

1. Verfahren zur Erzeugung glatter Oberflächen auf Gegenständen aus Polymeren von Ethylen, Propylen, Butadien und Polystyrol,
   dadurch gekennzeichnet,
   daß die Gegenstände der Einwirkung eines Gasgemisches aus 0,01 bis 0,5 Vol.-% Fluor, 0,5 bis 21 Vol.-% Sauerstoff und Stickstoff ausgesetzt werden.

2. Verfahren nach Anspruch 1,
   dadurch gekennzeichnet,
   daß es bei Temperaturen oberhalb des Kristallitschmelzpunktes des Polymers durchgeführt wird.

3. Verfahren nach Anspruch 2 zur Erzeugung glatter Oberflächen auf Gegenständen aus HDPE,
   dadurch gekennzeichnet,
   daß es bei Temperaturen zwischen 130 und 160° C durchgeführt wird.

4. Verfahren nach einem der Ansprüche 1 bis 3,
   dadurch gekennzeichnet,
   daß die Einwirkzeit des Gasgemisches 10 bis 30 Sekunden beträgt.

5. Verfahren nach einem der Ansprüche 1 bis 4,
   dadurch gekennzeichnet,
   daß es unter Drücken von 0,1 bis 11 bar durchgeführt wird.

6. Gegenstand aus HDPE, hergestellt nach Anspruch 3,
   dadurch gekennzeichnet,
   daß er eine Rauhigkeitstiefe von 0,4 bis 0,6 $\mu$m besitzt.

**Claims**

1. Process for producing smooth surfaces on articles made from polymers of ethylene, propylene, butadiene nd polystyrene, characterized in that the articles are exposed to a gas mixture comprising from 0.01 to 0.5 % by volume of fluorine, from 0.5 to 21 % by volume of oxygen and nitrogen.

2. Process according to Claim 1, characterized in that it is carried out at temperatures above the crystallite melting point of the polymer.

3. Process according to Claim 2 for producing smooth surfaces on articles made from HDPE, characterized in that it is carried out at temperatures between 130 and 160°C.

4. Process according to one of Claims 1 to 3, characterized in that the exposure time of the gas mixture is from 10 to 30 seconds.

5. Process according to one of Claims 1 to 4, characterized in that it is carried out at pressures of from 0.1 to 11 bar.

6. Article made from HDPE, produced according to Claim 3, characterized in that it has a roughness depth of from 0.4 to 0.6 $\mu$m.

**Revendications**

1. Procédé d'obtention de surfaces lisses sur des articles de polymères d'éthylène, de propylène, de butadiène et de polystyrène caractérisé en ce que :
les articles sont exposés à l'effet d'un mélange gazeux contenant de 0,01 à 0,5 % en volume de fluor, de 0,5 à 21 % en volume d'oxygène et de l'azote.

2. Procédé selon la revendication 1, caractérisé en ce qu'il est réalisé à des températures supérieures au point de fusion de la cristallite du polymère.

3. Procédé selon la revendication 2 pour obtenir des surfaces lisses sur des articles en HDPE (polyéthylène à haute densité), caractérisé en ce qu'il est réalisé à des température comprises entre 130 et 160°C.

4. Procédé selon une des revendications 1 à 3, caractérisé en ce que
la durée de l'effet du mélange gazeux est de 10 à 30 secondes.

5. Procédé selon une des revendications 1 à 4, caractérisé en ce qu'il est réalisé à des pressions de 0n1 à 11 bars.

6. Article en HDPE, caractérisé en ce qu'il possède une profondeur de rugosité de 0,4 à 0,6 $\mu$m.

Fig.1

x 2000

x 10000

Fig. 2

Fig. 3

x 2000

x 10000

Fig. 4